# NEUE EUROPÄISCHE PATENTSCHRIFT

(11) **EP 1 112 164 B2**
(45) Veröffentlichungstag und Bekanntmachung des Hinweises auf die Entscheidung über den Einspruch: **08.09.2010**
(45) Hinweis auf die Patenterteilung: 05.01.2005
(21) Anmeldenummer: 99947230.1
(22) Anmeldetag: 16.07.1999
(51) Int. Cl.: B29C 49/04, B29C 49/42

(54) **VERFAHREN UND VORRICHTUNG ZUR HERSTELLUNG EINES GROSSVOLUMIGEN BEHÄLTERS**
METHOD AND DEVICE FOR PRODUCING A LARGE-VOLUME CONTAINER
PROCEDE ET DISPOSITIF POUR LA PRODUCTION D'UN CONTENANT DE GRAND VOLUME

(30) Priorität: 16.09.1998 DE 19842309
(43) Veröffentlichungstag der Anmeldung: 04.07.2001
(73) Patentinhaber: RICHTER, Günther, 57610 Altenkirchen (DE)
(72) Erfinder: RICHTER, Günther, 57610 Altenkirchen (DE)
(74) Vertreter: Schaumburg, Karl-Heinz
(86) Internationale Anmeldenummer: PCT/DE1999/002213
(87) Internationale Veröffentlichungsnummer: WO 2000/015409

(56) Entgegenhaltungen:
- EP-A- 0 417 404
- DE-A- 1 479 216
- US-A- 5 346 665
- US-A- 5 474 734

## Beschreibung

Die Erfindung bezieht sich auf ein Verfahren zur Herstellung eines großvolumigen, tassen- oder wannenartigen Behälters aus thermoplastischem Kunststoff, bei dem ein schlauchartiger Vorformling aus kompaktem Kunststoff in einer vorgegebenen Länge extrudiert und anschließend zu dem Behälter verformt wird sowie auf eine Vorrichtung zur Durchführung des Verfahrens.

Es sind oben offene Transport- und Lagerbehälter aus kompaktem Kunststoff bekannt, die zunächst durch ein Extrusionsverfahren, bei dem ein schlauchartiger Vorformling erzeugt wird, und einen sich anschließenden Blasvorgang in einer mindestens zweiteiligen Hohlform, bei dem der schlauchartige Vorformling durch Blasluft aufgeweitet und an der Innenwand der Hohlform zum Anliegen gebracht wird, hergestellt werden. Der so geformte Behälter ist dann jedoch oben noch geschlossen. Durch Abtrennen des oberen Deckbereiches wird dann der benötigte, oben offene Behälter erreicht. Dieses Abtrennen stellt einen zusätzlichen Arbeitsvorgang dar, der eine besondere Abtrennvorrichtung erfordert. Darüber hinaus weist der obere Rand des Behälters eine verhältnismäßig geringe Festigkeit auf, was sich dann nachteilig bemerkbar macht, wenn der Behälter als Schutzbehälter für einen anderen Behälter verwendet wird.

Es ist ein Schutzbehälter für einen großvolumigen Behälter bekannt, durch den die aufgeführten Nachteile vermieden werden.

Dieser Schutzbehälter besitzt jedoch eine aus drei Schichten bestehende Wandung, von denen die innere Schicht aus schäumbarem Kunststoff gebildet ist. Eine solche Wandung bringt einerseits einen hohen Werkstoffbedarf mit sich und erfordert andererseits eine mit verhältnismäßig hohen Investitionen verbundene Extrusionsvorrichtung. Neben der Extrusionsvorrichtung wird auch eine aufwendige, aus Innen- und Außenform bestehende Form benötigt, die dem Schäumdruck der Innenschicht standhalten muß. Das Verfahren ist, wie bereits oben ausgeführt, nur mit einer aufschäumbaren Innenschicht durchführbar.

Der Erfindung liegt deshalb die Aufgabe zugrunde, ein Verfahren und Vorrichtungen zur Herstellung eines großvolumigen, tassen- oder wannenartigen Behälters aus thermoplastischem Kunststoff aufzuzeigen, welches mit äußerst einfachen Extrusionsvorrichtungen und Formen auskommt.

Diese Aufgabe wird durch die Merkmale der unabhängigen Ansprüche gelöst.

Ein derartiges Verfahren benötigt zur Erstellung eines großvolumigen, tassen- oder wannenartigen Behälters, mit einer Wandung aus kompaktem Kunststoff keinerlei komplizierte und aufwendige Extrusionsvorrichtung. Der Teil der Form, der die endgültige Form des Behälters bestimmt, kann einfach gestaltet sein, wobei vielfach bereits nur ein Kern als Formkörper ausreichend ist.

Weitere Merkmale eines Verfahrens gemäß der Erfindung sowie Vorrichtungen zur Durchführung des Verfahrens sind in den Ansprüchen 2 bis 5 und 8 bis 12 offenbart.

Die Erfindung wird nachfolgend anhand in einer Zeichnung dargestellter Ausführungsbeispiele näher erläutert.

Dabei zeigen
- Fig. 1: eine Draufsicht auf einen als Formkörper dienenden Kern zur Durchführung des erfindungsgemäßen Verfahrens,
- Fig. 2 bis 6: die einzelnen Verfahrensschritte zur Herstellung eines Behälters und
- Figur 7: einen abgewandelten Verfahrensschritt.

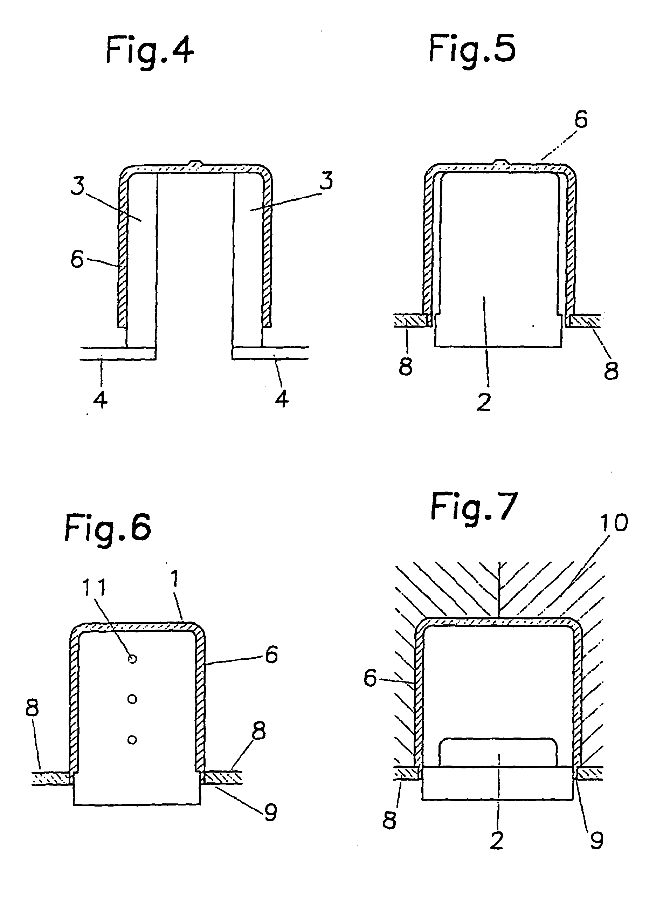

In den Figuren 6 und 7 der Zeichnung ist jeweils ein in unterschiedlicher Weise hergestellter Behälter 1 im Schnitt gezeigt, der äußerst einfach dargestellt ist. Dieser Behälter 1 kann sowohl im Bereich seiner seitlichen Wandungen besonders geformte Rippen aufweisen und auch im Bereich seines Bodens, der sich hier oben befindet, mit besonders geformten Rippen versehen sein, die für den Behälter 1 eine Art palettenartigen Boden bilden. Dieser Behälter 1, der hier aus kompaktem, thermoplastischem Kunststoff geformt ist, ist an seinem unteren Ende gemäß den Figuren 6 und 7 vollkommen offen ausgebildet, so daß der Behälter 1 also eine tassen- bzw. wannenartige Form besitzt.

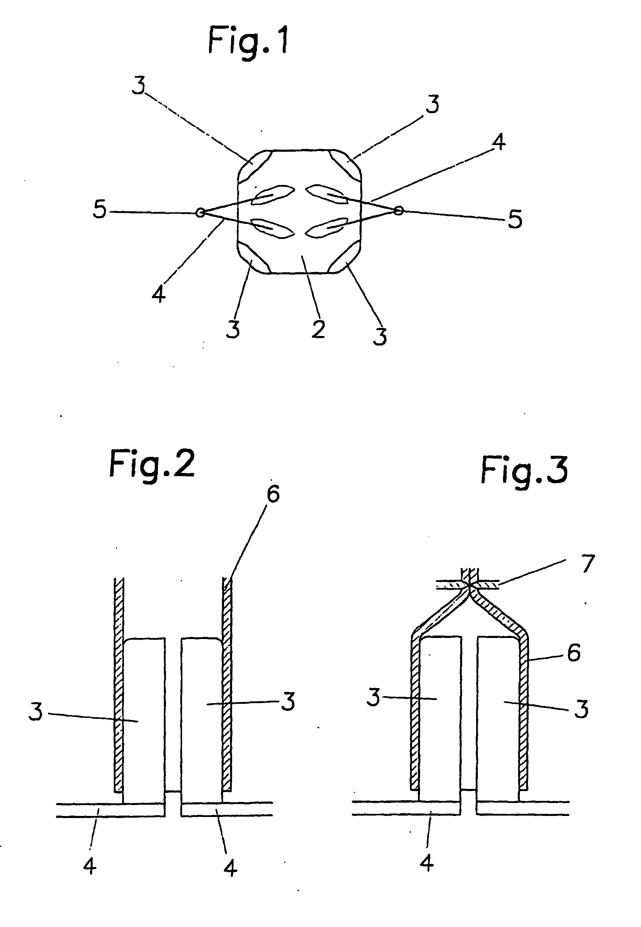

Der Behälter 1 gemäß der Figur 6 wird nun mittels eines Kernes 2 hergestellt, wie er in der Figur 1 der Zeichnung in einer Draufsicht gezeigt ist. Dieser als Formkörper wirkende Kern 2 besitzt einen annähernd rechteckigen Querschnitt und ist in allen vier Ecken mit jeweils einem Spreizelement 3 versehen, die jeweils den Querschnitt des Kernes 2 ergänzen, jedoch getrennt von demselben bewegbar sind. Die Spreizelemente 3 bilden eine sogenannte Aufweiteinheit. Jedes Spreizelement 3 wird von einem nur angedeuteten Schwenkhebel 4 getragen, der unterhalb des Kernes 2 um eine Achse 5 schwenkbar ist. Jeweils zwei benachbarte Schwenkhebel 4 sind mit ihren Spreizelementen 3 einer gemeinsamen Schwenkachse 5 zugeordnet. Für die Bewegung der Schwenkhebel 4 und damit der Spreizelemente 3 sind denselben an sich bekannte, in der Zeichnung jedoch nicht dargestellte Antriebe zugeordnet, durch die die Schwenkhebel 4 und damit die Spreizelemente 3 aus ihrer an den Ecken des Kernes 2 befindlichen Lage nach innen in die in Figur 1 dargestellte Lage und zurück bewegt werden können. Zusätzlich ist jeder Achse 5 ein an sich bekannter, jedoch nicht dargestellter Hubantrieb zugeordnet, über den die Schwenkhebel 4 und damit die Spreizelemente 3 in eine vorgegebene, weiter unten erläuterte Lage angehoben werden können. Bedarfsweise kann auch beiden Achsen 5 ein gemeinsamer Hubantrieb zugeordnet sein. Auch der Kern 2 kann über einen Hubantrieb angehoben werden. Dabei sind die Hubantriebe beispielsweise in einem besonderen Gestell untergebracht.

Bei der Herstellung des Behälters 1 gemäß Figur 6 wird nun davon ausgegangen, daß der Kern 2 abgesenkt ist und die Spreizelemente 3 ihre innere Lage innerhalb, jedoch oberhalb des Kernes 2 einnehmen. Dies bedeutet, daß die Spreizelemente 3 über ihre Schwenkarme 4 nach innen schwenkbar sind und jetzt ihre innere Lage einnehmen. In dieser Lage der Spreizelemente 3 wird nun von oben von einem nicht dargestellten Extruder ein schlauchartiger Vorformling 6 kontinuierlich oder diskontinuierlich über die nach innen bewegten Spreizelemente 3 bewegt, wie dies in der Figur 2 dargestellt ist. Dieser schlauchartige Vorformling 6 besitzt beispielsweise eine einschichtige Wandung aus kompaktem Kunststoff. Der Vorformling 6 wird nun in einer vorgegeben und in der Figur 2 erkennbaren Länge über die nach innen zusammengefahrenen Spreizelemente 3 extrudiert. Dabei werden die vier Spreizelemente 3 von dem schlauchartigen Vorformling 6 umschlossen. Sobald der Vorformling 6 die geforderte Länge erreicht hat, wird derselbe über nur angedeutete Messer 7 zusammengequetscht und verschweißt (Figur 3). Jetzt werden die Spreizelemente 3 über ihre Schwenkarme 4 so weit nach außen bewegt, daß der schlauchartige Vorformling 6 aufgeweitet wird. Das Maß der Aufweitung ist dabei so groß bemessen, daß in den aufgeweiteten Vorformling 6 gemäß der Figur 4 der Kern 2 eingefahren werden kann. Dies bedeutet, daß der Kern 2 angehoben wird. Mittels besonderer Klemmelemente 8 wird nun der extrudierte Vorformling 6 im Bereich seines unteren, offenen Endes gegen den Kern 2 gepreßt, so daß ein äußerst schmaler Quetschrand 9 entsteht, wie er in der Figur 6 der Zeichnung vergrößert dargestellt ist.

Der Kern 2 ist nun an seiner Oberfläche mit verhältnismäßig kleinen Kanälen 11 versehen, die in einen zentralen Kanal münden. Dieser zentrale Kanal ist an eine Vakuumleitung angeschlossen. Durch Anlegen von Vakuum an die Kanäle 11 wird nun die Wandung des Vorformlings 6 an der Oberfläche des Kernes 2 zum Anliegen gebracht. Damit entsteht der Behälter 1 gemäß der Figur 6. Nach dem Erkalten bzw. Erhärten des Behälters 1 kann der Kern 2 aus demselben entfernt und der äußerst dünne Quetschrand 9 mittels eines Messers abgetrennt werden.

Bei dem beschriebenen Verfahren wird der Behälter 1 ohne die Verwendung einer Außenform hergestellt. Dies bedeutet jedoch, daß die Dicke der Wandung des Behälters 1 nicht überall unbedingt eine gleichmäßige Dicke aufweist. Durch entsprechende Steuerung des Extrusionsvorganges ist es nun möglich, die Dicke der Wandung des schlauchartigen, extrudierten Vorformlings 6 unterschiedlich auszubilden, so daß auch die Wandung des fertigen Behälters 1 in den einzelnen Bereichen seiner Höhe unterschiedlich sein kann. Für das Entfernen des Kernes 2 aus dem Behälter 1 ist es nur erforderlich, den Behälter 1 an einer Abstreiferleiste festzuhalten und den Kern 2 zusammen mit den Spreizelementen 3 wieder in seine untere Ausgangslage zurückzubewegen. Der Behälter 1 ist nun vollkommen frei und kann aus der Vorrichtung entfernt werden.

Bei der Herstellung des Behälters 1 der Figur 7 wird die Form des Behälters 1 nicht durch den Kern 2, sondern durch eine zweiteilige Außenform 10 bestimmt. Der Kern 2 kann demzufolge also erheblich kürzer ausgebildet sein. Auch hier wird der Kern 2 mit dem Vorformling 6 gemäß der Figur 5 in die Außenform 10 bewegt und dort mittels Klemmelemten 8 am Kern 2 festgeklemmt. Dabei entsteht ebenfalls ein Quetschrand 9. Nach dem Schließen der Hohlform 10 über den Kern 2 wird durch den Kern 2 Blasluft in den schlauchartigen Vorformling 6 eingeleitet, die dazu führt, daß der schlauchartige Vorformling 6 an der Innenwandung der Hohlform 10 zum Anliegen kommt. Nach dem Erkalten des Behälters 1 werden auch hier der Quetschrand 9 mittels eines Messers abgetrennt und die Hohlform 10 sowie der Kern 2 entfernt.

In Abänderung der erläuterten Ausführungsbeispiele ist es möglich, nur zwei, drei oder mehr als vier Spreizelemente 3 zu verwenden. Bei zwei Spreizelementen 3 müssen diese etwa schalenartig geformt und können aufklappbar bzw. auffaltbar ausgebildet sein. Der Querschnitt der Spreizelemente 3 kann sonst weitgehend beliebig sein. Entscheidend ist hier, daß die Spreizelemente 3 in der Lage sind, den im Querschnitt kleineren Vorformling 6 so aufzuweiten bzw. so in seiner Umfangslinie zu vergrößern, daß ein Kern 2 eingeführt werden kann, dessen Querschnitt größer als der ursprüngliche Querschnitt des extrudierten Vorformlings 6 ist.

## Patentansprüche

1. Verfahren zur Herstellung eines großvolumigen, tassen- oder wannenartigen Behälters aus thermoplastischem Kunststoff, bei dem ein schlauchartiger Vorformling (6) aus kompaktem Kunststoff in einer vorgegebenen Länge extrudiert wird,
bei dem der extrudierte Vorformling (6) zunächst um ein vorgegebenes Maß aufgeweitet wird,
danach von unten ein Kern (2) in den aufgeweiteten Vorformling (6) bewegt wird,
danach der aufgeweitete Vorformling (6) an seinem unteren freien Ende mit Hilfe von Klemmelementen (8) dichtend gegen den Kern (2) verspannt wird, wodurch die Öffnung des Behälters geformt wird und ein äußerst dünner Quetschrand (9) mit einer gegenüber einem nicht gequetschten angrenzenden Teil des Behälters verriegelten Wandstärke entsteht wobei, die Öffnungsfläche etwa der Querschnittsfläche des Behälters entspricht,
und bei dem anschließend der Vorformling (6) mittels Formluft zu dem Behälter geformt wird.

2. Verfahren nach Anspruch 1, **dadurch gekennzeichnet, dass** der Behälter mittels Vakuum an dem als Formkörper ausgebildeten Kern (2) geformt wird.

3. Verfahren nach Anspruch 1, **dadurch gekennzeichnet, dass** der Behälter mittels Vakuum oder Blasluft an einer den Kern (2) mit Abstand umschließenden und als Formkörper ausgebildeten, zumindest zweiteiligen Hohlform (10) geformt wird.

4. Verfahren nach mindestens einem der Ansprüche 1 bis 3, **dadurch gekennzeichnet, dass** der extrudierte Vorformling (6) durch mindestens zwei stabartige Spreizelemente (3) aufgeweitet wird.

5. Verfahren nach mindestens einem der Ansprüche 1 bis 3, **dadurch gekennzeichnet, dass** der extrudierte Vorformling (6) durch den Kern (2) aufgeweitet wird.

6. Vorrichtung zur Durchführung des Verfahrens nach mindestens einem der Ansprüche 1 bis 5, bestehend aus einem Extrusionskopf zur Bildung eines schlauchartigen Vorformlings (6) aus einschichtigem, kompaktem Kunststoff,
wobei unterhalb des zu bildenden Vorformlings (6) eine durch eine Relativbewegung in den Vorformling (6) bewegbare Aufweiteinheit sowie nach dem Aufweiten des Vorformlings (6) ein ebenfalls in den Vorformling (6) bewegbarer Kern (2) angeordnet sind, wobei dem Kern (2) mindestens zwei Klemmelemente (8) zugeordnet sind,
und wobei der Kern (2) mit Vakuum beaufschlagbar ist,
wobei der Kern (2) die Öffnung des Behälters formt, deren Öffnungsfläche etwa der Querschnittsfläche des Behälters entspricht,
und wobei die Klemmelemente (8) den extrudierten Vorformling (6) im Bereich seines unteren, offenen Endes gegen den Kern (2) pressen, so dass ein äußerst dünner Quetschrand (9) mit einer gegenüber einem nicht gequetschten angrenzenden Teil des Behälters verriegelten Wandstärke entsteht.

7. Vorrichtung zur Durchführung des Verfahrens nach mindestens einem der Ansprüche 1 bis 5, bestehend aus einem Extrusionskopf zur Bildung eines schlauchartigen Vorformlings (6) aus einschichtigem, kompaktem Kunststoff,
wobei unterhalb des zu bildenden Vorformlings (6) eine durch eine Relativbewegung in den Vorformling (6) bewegbare Aufweiteinheit sowie nach dem Aufweiten des Vorformlings (6) ein ebenfalls in den Vorformling (6) bewegbarer Kern (2) angeordnet sind, wobei dem Kern (2) mindestens zwei Klemmelemente (8) und eine den Kern (2) mit Abstand umschließende und mit Vakuum oder Blasluft beaufschlagbare Hohlform (10) zugeordnet sind,
wobei der Kern (2) die Öffnung des Behälters formt, deren Öffnungsfläche etwa der Querschnittsfläche des Behälters entspricht,
und wobei die Klemmelemente (8) den extrudierten Vorformling (6) im Bereich seines unteren, offenen Endes gegen den Kern (2) pressen, so dass ein äußerst dünner Quetschrand (9) mit einer gegenüber einem nicht gequetschten angrenzenden Teil des Behälters verriegelten Wandstärke entsteht.

8. Vorrichtung nach Anspruch 6 oder 7, **dadurch gekennzeichnet, dass** die Aufweiteinheit durch mindestens zwei auseinanderfahrbare Spreizelemente (3) gebildet ist.

9. Vorrichtung nach Anspruch 8, **dadurch gekennzeichnet, dass** die Spreizelemente (3) unterschiedliche Querschnittsformen aufweisen.

10. Vorrichtung nach Anspruch 8 oder 9, **dadurch gekennzeichnet, dass** die Spreizelemente (3) aus Teilen des Formkörpers (2) gebildet sind.

11. Vorrichtung nach mindestens einem der Ansprüche 8 bis 10, **dadurch gekennzeichnet, dass** die Spreizelemente (3) radial verschiebbar ausgebildet sind.

12. Vorrichtung nach mindestens einem der Ansprüche 8 bis 10, **dadurch gekennzeichnet, dass** die Spreizelemente (3) verschwenkbar ausgebildet sind.

## Claims

1. A method for producing a large-volume, cup-shaped or tub-shaped container of thermoplastic material, wherein a hose-shaped pre-form (6) of compact plastic material is extruded to a predetermined length,
the extruded pre-form (6) being initially widened by a predetermined amount,
a core (2) being subsequently moved from below into the widened pre-form (6),
the widened pre-form (6) being subsequently clamped at a lower free end thereof with the aid of clamping elements (8) sealingly against the core (2), such that an opening of the container is formed and an extremely thin squeezed rim (9) having a wall thickness which is reduced compared to a non-squeezed adjacent part of the container is produced, wherein an area of the opening is approximately equal to a cross-sectional area of the container,
and the pre-form (6) being subsequently formed into the container by means of shaping air.

2. The method according to claim 1, **characterized in that** by means of vacuum said container is formed on the core (2) configured as a shaping body.

3. The method according to claim 1, **characterized in that** by means of vacuum or blowing air said container is formed on an at least two-part hollow mold (10) surrounding the core (2) at a spacing and configured as a shaping body.

4. The method according to at least one of claims 1 to 3, **characterized in that** the extruded pre-form (6) is widened by at least two rod-shaped spreading elements (3).

5. The method according to at least one of claims 1 to 3, **characterized in that** said extruded pre-form (6) is widened by the core (2).

6. A device for carrying out the method according to at least one of claims 1 to 5, comprising an extrusion head for forming a hose-shaped pre-form (6) of a single-layer compact plastic material,
a spreading unit being mounted below the pre-form (6) to be formed and movable into the pre-form (6) by relative movement and a core (2) being also mounted to be movable into the pre-form (6) after spreading the pre-form (6), wherein at least two clamping elements (8) are assigned to the core (2),
and the core (2) being loadable with vacuum,
the core (2) being configured to form the opening of the container, an opening area thereof being approximately equal to a cross-sectional area of the container,
and the clamping elements (8) pressing the extruded pre-form (6) in the area of its lower open end against the core (2) so that an extremely thin squeezed rim (9) having a wall thickness which is reduced compared to a non-squeezed adjacent part of the container is produced.

7. The device for carrying out the method according to at least one of claims 1 to 5, comprising an extrusion head for forming a hose-shaped pre-form (6) of a single-layer compact plastic material,
a spreading unit being mounted below the pre-form (6) to be formed and movable into the pre-form (6) by relative movement and a core (2) being also mounted to be movable into the pre-form (6) after spreading the pre-form (6), wherein at least two clamping elements (8) and a hollow mold (10) surrounding the core (2) at a spacing and being loadable with vacuum or blowing air are assigned to the core (2),
the core (2) being configured to form the opening of the container, an opening area thereof being approximately equal to a cross-sectional area of the container,
and the clamping elements (8) pressing the extruded pre-form (6) in the area of its lower open end against the core (2) so that an extremely thin squeezed rim (9) having a wall thickness which is reduced compared to a non-squeezed adjacent part of the container is produced.

8. The device according to claims 6 or 7, **characterized in that** said spreading unit comprises at least two spreading elements (3) that can be moved apart.

9. The device according to claim 8, **characterized in that** said spreading elements (3) have different cross-sectional shapes.

10. The device according to claims 8 or 9, **characterized in that** said spreading elements (3) are formed of parts of the shaping body (2).

11. The device according to at least one of claims 8 to 10, **characterized in that** said spreading elements (3) are configured to be radially movable.

12. The device according to at least one of claims 8 to 10, **characterized in that** said spreading elements (3) are configured to be pivotable.

## Revendications

1. Procédé de fabrication d'un récipient de grand volume, du type tasse ou bassine, en matière thermoplastique, dans lequel
une préforme (6) de type tuyau en matière plastique compacte est extrudée à une longueur prédéterminée,
la préforme extrudée (6) est tout d'abord élargie dans une mesure prédéterminée,
puis un noyau (2) est déplacé depuis le bas pour son introduction dans la préforme élargie (6),
puis la préforme élargie (6) est déformée à son extrémité inférieure libre à l'aide d'éléments de serrage (8) de façon étanche contre le noyau (2) de façon à conformer l'ouverture du récipient et à former un bord de pincement très mince avec une épaisseur réduite en comparaison d'une portion adjacente du récipient non serrée, la surface d'ouverture correspondant sensiblement à la section du récipient, et
la préforme (6) est ensuite mise en forme avec l'air de formage pour donner le récipient.

2. Procédé selon la revendication 1, **caractérisé en ce que** le récipient est mis en forme par dépression au niveau du noyau (2) qui fait fonction de corps de formage.

3. Procédé selon la revendication 1, **caractérisé en ce que** le récipient est mis en forme par dépression ou avec de l'air soufflage au niveau d'un moule (10) qui comporte au moins deux parties, qui entoure à distance le noyau (2) et qui fait fonction de corps de formage.

4. Procédé selon au moins l'une des revendications 1 à 3, **caractérisé en ce que** la préforme extrudée (6) est élargie par au moins deux éléments écarteurs (3) de type barre ;

5. Procédé selon au moins l'une des revendications 1 à 3, **caractérisé en ce que** la préforme extrudée (6) est élargie par le noyau (2).

6. Dispositif destiné à mettre en oeuvre le procédé selon au moins une des revendications 1 à 5, lequel dispositif est constitué d'une tête d'extrusion destinée à former une préforme (6) de type tuyau en une matière plastique compacte monocouche, et dans lequel :
une unité d'élargissement mobile par un déplacement relatif dans la préforme (6) et, après élargissement de la préforme (6), un noyau (2) également mobile dans la préforme (6) sont placés au-dessous de la préforme à former (6), le noyau (2) étant associé à au moins deux éléments de serrage (8),
et le noyau (2) étant soumis à une dépression,
et le noyau (2) formant l'ouverture du récipient, ouverture dont la surface correspond sensiblement à la section du récipient,
et les éléments de serrage (8) pressant la préforme (6) extrudée contre le noyau dans la zone de son extrémité inférieure ouverte, de sorte à former un bord de pincement très mince avec une épaisseur réduite en comparaison d'une portion adjacente du récipient non serrée.

7. Dispositif destiné à mettre en oeuvre le procédé selon au moins une des revendications 1 à 5, lequel dispositif est constitué d'une tête d'extrusion destinée à former une préforme (6) de type tuyau en une matière plastique compacte monocouche, et dans lequel :
une unité d'élargissement mobile par un déplacement relatif dans la préforme (6) et, après élargissement de la préforme (6), un noyau (2) également mobile dans la préforme (6) sont placés au-dessous de la préforme à former (6), le noyau (2) étant associé à au moins deux éléments de serrage (8) ainsi qu'à un moule (10) entourant à distance le noyau (2) et étant soumis à une dépression ou de l'air de soufflage,
le noyau (2) formant l'ouverture du récipient, ouverture dont la surface correspond sensiblement à la section du récipient,
et les éléments de serrage (8) pressant la préforme (6) extrudée contre le noyau (2) dans la zone de son extrémité inférieure ouverte, de sorte à former un bord de pincement très mince avec une épaisseur réduite en comparaison d'une portion adjacente du récipient non serrée.

8. Dispositif selon la revendication 6 ou 7, **caractérisé en ce que** l'unité d'élargissement est formée par au moins deux éléments écarteurs (3) pouvant être écartés.

9. Dispositif selon la revendication 8, **caractérisé en ce que** les éléments écarteurs (3) ont des formes de sections différentes.

10. Dispositif selon la revendication 8 ou 9, **caractérisé en ce que** les éléments écarteurs (3) sont constitués de parties du corps de formage (2).

11. Dispositif selon l'une au moins des revendications 8 à 10, **caractérisé en ce que** les éléments écarteurs (3) sont conformées de façon à être mobiles radialement.

12. Dispositif selon l'une au moins des revendications 8 à 10, **caractérisé en ce que** les éléments écarteurs (3) sont conformés de façon à pouvoir pivoter.
